# FASCICULE DE BREVET EUROPEEN

(11) **EP 3 114 013 B1**
(45) Date de publication et mention de la délivrance du brevet: **18.04.2018**
(21) Numéro de dépôt: 15709229.7
(22) Date de dépôt: 10.02.2015
(51) Int. Cl.: B62D 25/20

(54) **RENFORT DE PLANCHER POUR VEHICULE AUTOMOBILE**
BODENVERSTÄRKER FÜR EIN MOTORFAHRZEUG
FLOOR STRENGTHENER FOR MOTOR VEHICLE

(30) Priorité: 07.03.2014 FR 1451847
(43) Date de publication de la demande: 11.01.2017
(73) Titulaire: PSA Automobiles SA, 78300 Poissy (FR)
(72) Inventeur: CONVERS, Germain, F-25200 Bethoncourt (FR); VERDIER, Laurent, F-90000 Belfort (FR); LE BARS, Franck, F-33200 Bordeaux (FR); BOUVROT, Frédéric, F-25150 Bourguignon (FR); ALPY, Eric, F-25460 Etupes (FR); CADET, Stéphane, F-70110 Magny (FR)
(86) Numéro de dépôt international: PCT/FR2015/050317
(87) Numéro de publication internationale: WO 2015/132494

(56) Documents cités:
- EP-A1- 1 253 067
- EP-A2- 0 066 963
- DE-A1-102008 036 179
- GB-A- 2 260 296
- JP-A- H06 171 552
- JP-A- H08 175 203
- JP-A- 2003 205 870
- US-A1- 2007 045 034

## Description

L'invention a trait à l'absorption de chocs latéraux d'un véhicule automobile. Plus particulièrement, l'invention a trait à une structure de plancher de véhicule comprenant un tunnel central ainsi qu'à un véhicule apte à mieux absorber des chocs latéraux.

La réalisation d'une structure de plancher de véhicule varie généralement selon la forme donnée au plancher du véhicule. Certains véhicules, parmi ceux-ci classiquement ceux ayant une faible hauteur sous plancher et un bloc moteur à l'avant du véhicule, ont un plancher formant un tunnel de manière à créer un passage pour notamment un tuyau d'échappement de l'avant vers l'arrière du véhicule. Une structure de plancher, située à niveau du conducteur et des passagers, joint généralement le tunnel avec les longerons longitudinaux de bas de caisse ; elle est réalisée de manière à absorber l'énergie de déformation reçue en cas de choc du véhicule. La structure de plancher est classiquement le lieu de fixation des sièges du véhicule.

La réalisation d'une structure de véhicule doit satisfaire à de nombreuses prestations notamment des tests de choc. Parmi ces tests il existe le test de choc latéral contre un poteau.

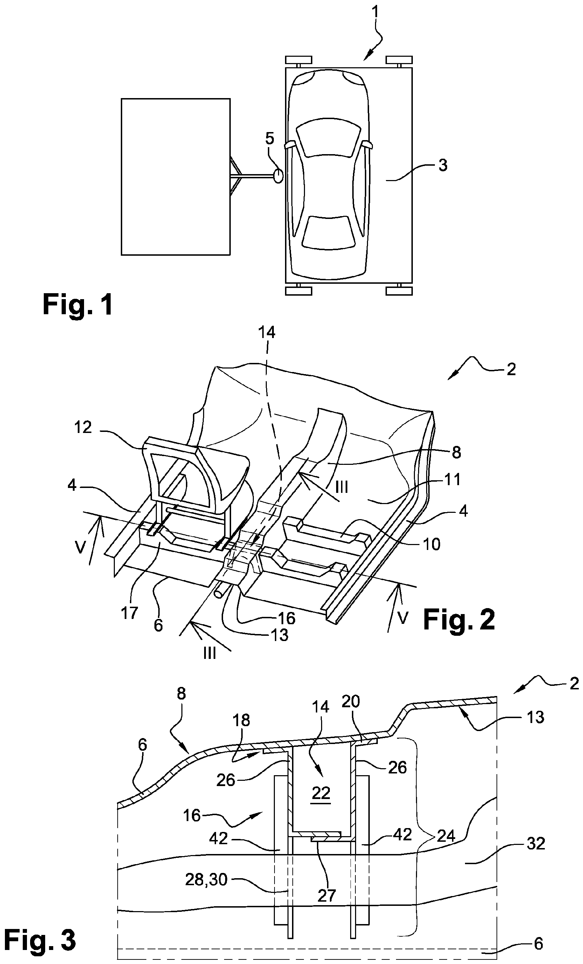

La figure 1 illustre les conditions de test de choc latéral contre un poteau fixe. Lors d'un tel test, le véhicule 1 est monté sur une plateforme 3 lancée à 29km/h dans une direction perpendiculaire à l'axe du véhicule, de manière à ce que le véhicule percute latéralement un poteau 5, au niveau du conducteur. La déformation transversale de l'habitacle engendrant des risques importants de blessures, notamment au niveau du thorax ou de l'abdomen, le test vise à donner une notation en lien avec l'amplitude de cette déformation. Or, une nouvelle norme plus stricte est en cours de préparation, elle est susceptible d'être introduite dans le protocole du « test choc poteau Ncap 2016 », « New car assessment program ». La nouvelle norme sera plus stricte notamment sur l'amplitude de déformation transversale acceptable.

Il est donc souhaitable de réduire la déformation transversale lors d'un choc latéral contre un poteau pour une meilleure sécurité du conducteur et des passagers, et notamment en vue de cette nouvelle norme.

Il est connu, pour réduire l'amplitude de déformation transversale d'un véhicule comprenant un plancher en forme de tunnel, de le renforcer par exemple avec des doublures épousant l'intérieur du tunnel. Ce renfort doit pour être efficace être réalisé sur une longueur longitudinale sensiblement importante du tunnel ce qui impacte sensiblement la masse du véhicule.

Le document de brevet publié EP1912851B1 divulgue un renfort de plancher réalisé sous la forme d'une plaque fixée au pied de la forme en tunnel. Cet enseignement est intéressant en ce qu'il participe assez efficacement à la réduction de la déformation du plancher. Il peut cependant impliquer de modifier le montage du véhicule, notamment pour la fixation du tuyau d'échappement, cette plaque bloquant l'accès d'une partie du tunnel.

L'invention a pour objectif d'améliorer la sécurité du conducteur et des passagers lors d'un choc latéral notamment contre un poteau. Plus particulièrement, l'invention a pour objectif de proposer une solution pour rigidifier la structure d'un plancher de véhicule comprenant une forme en tunnel, afin de réduire l'amplitude de déformation transversale lors d'un choc latéral, et notamment lors du test de « choc poteau Ncap 2016 ».

L'invention a pour objet un plancher de véhicule automobile comprenant une paroi formant un tunnel central de concavité vers le bas s'étendant dans la direction longitudinale du véhicule ; et une ou plusieurs traverse(s) transversale(s) d'assise fixées sur la face supérieure de la paroi latéralement au tunnel; et un ou plusieurs renfort(s) fixé(s) sur la face inférieure de la paroi dans le tunnel, remarquable en ce qu'au moins un renfort est un profilé essentiellement droit s'étendant dans le tunnel dans la direction transversale du véhicule, ledit profilé étant situé, longitudinalement, au niveau d'une traverse transversale de manière à rigidifier le plancher en cas de choc latéral du véhicule. Un tel plancher de véhicule automobile correspond au préambule de la revendication 1 et est divulgué par le document JP 2003 205870.

Selon l'invention, le profilé forme un profil en I majuscule en position couché, les ailes du profil étant formées par, deux cloisons verticales. Selon un mode avantageux de l'invention, le profilé transversal est fixé au fond du tunnel au moyen de nervures, ledit fond et le profilé formant un corps creux le long desdites nervures.

Selon un mode avantageux de l'invention, le profilé est essentiellement creux, préférentiellement de profil carré, encore plus préférentiellement de profil rectangulaire.

Selon un mode avantageux de l'invention, le profilé transversal est fixé sur plus de 50% du fond du tunnel dans la direction transversale, préférentiellement plus de 70%, plus préférentiellement plus de 90%.

Avantageusement, le fond du tunnel à une largeur comprise entre 100mm et 250mm.

Selon un mode avantageux de l'invention, la hauteur du corps creux est comprise entre 30% et 60% de la hauteur du profilé, préférentiellement entre 40% et 50%. Avantageusement, le corps creux a une hauteur comprise entre 50mm et 90mm.

Selon un mode avantageux de l'invention, le contour inférieur des cloisons verticales comprend une encoche apte à recevoir par en dessous le passage d'un tuyau d'échappement.

Avantageusement, l'encoche est décalée de l'axe longitudinal du véhicule de manière à ménager de la place pour l'emplacement d'une sonde dans le tuyau d'échappement.

Avantageusement, une cloison comprend une languette destinée à la fixation d'une bride de tuyau d'échappement et/ou de sonde de contrôle des gaz d'échappement.

Selon un mode avantageux de l'invention, la hauteur des cloisons à niveau de l'encoche est de moins de 60%, préférentiellement moins de 40% de la hauteur au niveau de leurs extrémités latérales.

Selon un mode avantageux de l'invention, le profilé est fixé par ses extrémités latérales au moyen de nervures sur les faces latérales du tunnel, lesdites nervures étant préférentiellement formées dans les cloisons verticales dudit profilé.

Avantageusement, les extrémités latérales du profilé sont fixées sur plus de 50% de la hauteur des faces latérales du tunnel.

Selon un mode avantageux de l'invention, la largeur, dans la direction longitudinale du véhicule, du profilé, est comprise entre 60% et 140% de la largeur de la traverse transversale, préférentiellement entre 80% et 120%.

Selon un mode avantageux de l'invention, le profilé est réalisé en une pièce, préférentiellement deux, encore plus préférentiellement trois, lesdites pièces formant ledit profilé étant préférentiellement mises à forme par emboutissage.

Avantageusement, les pièces du profilé sont assemblées par des cordons de soudure.

Avantageusement, l'épaisseur de la ou des pièces formant le profilé est de moins de 3 millimètres, en acier à haute résistance à la rupture.

Avantageusement, l'acier a une limite élastique Re > 450MPa et une résistance à la rupture Rm > 750MPa.

L'invention a également pour objet un véhicule automobile comprenant un bas de caisse comprenant deux longerons longitudinaux ; un plancher fixé aux deux longerons, remarquable en ce que le plancher est conforme à l'invention.

Selon un mode avantageux de l'invention, le profilé est monté dans l'axe d'une traverse arrière d'assise avant de manière à renforcer le plancher, en particulier au niveau de la tête du conducteur ou du passager, en cas de choc latéral sur un poteau.

Avantageusement, la déformation transversale du véhicule en cas de test de choc latéral contre un poteau est réduite de plus de 15%.

Avantageusement, la réduction de la déformation transversale est d'une valeur comprise entre 50mm et 80mm.

Les mesures de l'invention sont intéressantes en ce qu'elles permettent de réduire l'amplitude de déformation transversale lors d'un choc latéral contre un poteau, notamment le « test choc poteau Ncap 2016 ». En effet, le profilé droit de renfort est orienté dans une direction transversale pour travailler en compression lors du choc latéral ; son positionnement dans l'axe d'une traverse transversale liée au longeron dirigeant le chemin de déformation et d'absorption d'énergie. La rigidité du plancher ainsi réalisée permet de réduire l'amplitude de déformation transversale du véhicule. De plus, l'efficacité du renfort liée à son profil tend à réduire l'augmentation de masse pour le véhicule ; le profilé peut aussi être aisément rapporté lors du montage, sans remettre en cause les interfaces structurelles du véhicule, notamment avec le tuyau d'échappement.

D'autres caractéristiques et avantages de la présente invention seront mieux compris à l'aide de la description et des dessins parmi lesquels :
- La figure 1 illustre les conditions de test de choc latéral d'un véhicule contre un poteau fixe ;
- La figure 2 est une vue en perspective d'un plancher de véhicule conforme à l'invention
- La figure 3 est une vue en coupe longitudinale du plancher de la figure 2 au niveau d'un profilé droit de renfort selon un premier mode de réalisation ;
- La figure 4 est une vue en perspective d'un profilé droit de renfort selon un deuxième mode de réalisation ;
- La figure 5 est une vue en coupe transversale du plancher de la figure 2 au niveau d'un profilé selon le deuxième mode de réalisation ;
- La figure 6 est une vue de dessous du plancher de la figure 2 au niveau d'un profilé selon le deuxième mode de réalisation ;

La figure 1 a déjà été décrite précédemment dans le cadre de la discussion de l'art antérieur.

La figure 2 est une vue en perspective du plancher 2 d'un véhicule automobile monté à deux longerons longitudinaux 4. Le plancher 2 comprend une paroi 6 formant un tunnel central 8 de concavité vers le bas s'étendant dans la direction longitudinale du véhicule. Le plancher 2 comprend également une ou plusieurs traverse(s) transversale(s) d'assise 10 fixées sur la face supérieure 11 de la paroi 6 latéralement au tunnel 8. A titre d'exemple et sans limitation dans le cadre de l'invention, une assise 12 est représentée fixée au plancher 2.

Un véhicule comprenant un plancher avec une forme en tunnel est particulièrement déformable. En effet, les faces du tunnel orientées majoritairement dans une direction verticale travaillent principalement en cisaillement et forment une zone de déformation prioritaire du plancher lors d'un choc latéral. Sans d'autres mesures et en raison de cette faible rigidité du tunnel un tel plancher est particulièrement déformable. De manière à pallier à cette faiblesse et dans le cadre de l'invention, le plancher 2 comprend au moins un profilé de renfort droit 14 fixé dans le tunnel 8, sur la face inférieure 13 de la paroi 6, le profilé 14 s'étendant dans la direction transversale du véhicule. Le profilé droit 14 est aussi fixé aux faces latérales 16 du tunnel 8 et est situé à niveau d'une traverse d'assise 10. Le profilé droit 14 et la traverse 10 étant dans un même axe, ils travaillent ensembles principalement en compression lors d'un choc latéral. Selon un mode préféré de réalisation, un tel profilé droit 14 est situé à niveau d'une traverse arrière 17 d'assise avant 12 de manière à renforcer le plancher, en particulier au niveau de la tête du conducteur ou du passager, en cas de choc latéral sur un poteau. Afin d'améliorer encore la rigidité du plancher, un profilé 14 peut être fixé dans l'axe de plusieurs autres traverses 10. Le profilé droit 14 peut avoir un profil creux, par exemple carré ou rectangulaire

La figure 3 est une vue en coupe longitudinale du plancher 2 au niveau d'un profilé droit de renfort 14 selon un premier mode de réalisation ne limitant pas en soi l'étendue de l'invention. Le profilé 14 est représenté dans le tunnel 8 sous la face inférieure 13 de la paroi 6. Il est fixé au fond 18 du tunnel 8 au moyen de nervures 20, ledit fond 18 et le profilé 14 formant un corps creux 22 le long desdites nervures 20. Le profilé transversal 14 peut être fixé sur plus de 50% du fond du tunnel dans sa direction transversale, il peut aussi l'être sur plus de 70% voire plus de 90%. Le fond 18 du tunnel 8 peut avoir une largeur comprise entre 100mm et 250mm. La hauteur du corps creux 22 est comprise entre 30% et 60% de la hauteur 24 du profilé 14, préférentiellement entre 40% et 50%. En l'occurrence, le corps creux 22 peut avoir une hauteur comprise entre 50mm et 90mm. Le corps creux 22 ainsi réalisé est particulièrement intéressant en ce qu'il augmente, par rapport à un profil ouvert, la résistance en compression du profilé 14 dans la direction transversale du véhicule.

La figure 3 rend particulièrement visible le profil droit du profilé 14. Le profilé est en forme de I en position couché, les ailes du profilé 14 formant deux cloisons verticales 26. Le profilé 14 peut être réalisé en une ou plusieurs pièces ; dans ce mode de réalisation préféré, il est en deux pièces soudées entre elles au niveau de l'âme 27 du profilé. Le contour inférieur 28 des cloisons verticales 26 comprend une encoche 30 recevant, par en dessous, le passage d'un tuyau d'échappement 32. Le profilé 14 est fixé aux faces latérales 16 du tunnel 8 par ses extrémités latérales au moyen de nervures 42. Les nervures 42 peuvent être formées dans les cloisons verticales 26 du profilé 14. Les extrémités latérales du profilé peuvent être fixées sur plus de 50% de la hauteur des faces latérales 16 du tunnel 8. On peut voir également sur l'image le tuyau d'échappement 32 passant dans le tunnel 8 sous le profilé droit de renfort 14.

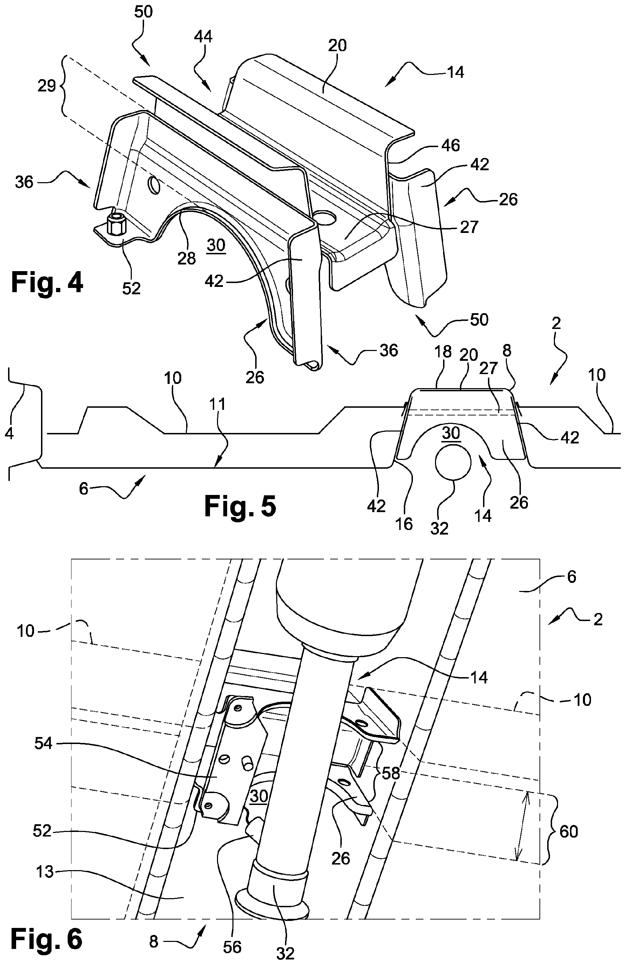

Les figures 4 et 5 représentent le profilé droit de renfort 14 conforme à l'invention selon un deuxième mode de réalisation.

La figure 4 est une vue en perspective du profilé 14 en forme de I couché. Le profilé 14 est en l'occurrence réalisé en trois pièces, la première pièce 44 étant centrale dans l'assemblage, la deuxième et la troisième pièce étant chacune une cloison 26 agencée à des côtés opposés de la pièce centrale 44. La pièce centrale de l'assemblage forme l'âme 27 du profil ainsi que les parties supérieures 46 des ailes du profil, la partie inférieure des ailes du profil étant formée par les cloisons verticales 26. On peut voir le contour inférieur 28 formant l'encoche 30 d'une cloison verticale. La hauteur 29 des cloisons 26 au niveau de l'encoche 30 est de moins de 60% de celle au niveau de leurs extrémités latérales 36, elle peut aussi être de moins de 40% de cette hauteur, ce qui donne l'espace de ménagement pour le tuyau d'échappement. La pièce centrale 44 est, une fois montée dans le tunnel, destinée à former le corps creux avec le fond du tunnel. On peut voir les nervures 20 de fixation au fond du tunnel réalisées dans la pièce centrale 44, on peut voir également aux extrémités 50 du profilé 14 les nervures 42 de fixation aux faces latérales du tunnel. Les nervures 42 sont en l'occurrence réalisées dans les cloisons verticales 26 ainsi que dans la pièce centrale 44.

Le mode de réalisation présenté à la figure 4 est particulièrement intéressant en ce que chacune des pièces 26, 44 formant le profilé 14 peut être en tôle d'acier facilement emboutissable. Les tôles sont ensuite assemblées par soudage ou par un système de vis / écrou, elles sont en l'occurrence soudées. Les tôles ont de préférence une épaisseur de moins de trois millimètres, au moins l'une d'elles peut être en acier à haute résistance à la rupture. L'acier peut avoir une limite élastique Re > 450MPa et une résistance à la rupture Rm > 750MPa, l'homme de l'art étant apte à sélectionner les nuances d'acier selon ces caractéristiques mécaniques. La cloison 26 peut comprendre une languette 52 destinée à la fixation d'un équipement.

La figure 5 est une vue en coupe transversale du plancher 2 du véhicule au niveau du profilé de renfort 14 selon un deuxième mode de réalisation. On peut voir un longeron 4, la paroi 6 de plancher montée sur le longeron 4 et formant le tunnel 8, une traverse 10 fixée sur la face supérieure 11 de la paroi 6, dans l'axe du profilé 14. En ce qui concerne le profilé 14, la coupe est réalisée au niveau des nervures 42 de fixation aux faces latérales 16 du tunnel 8 ainsi qu'au niveau d'une nervure 20 de fixation au fond 18 du tunnel. Les nervures 42 en question s'étendent sur plus de 70% de la hauteur des faces latérales, la nervure 20 s'étend sur plus de 70% du fond 18 du tunnel dans sa direction transversale. L'encoche 30 dans la cloison verticale 26 peut avoir une forme en V, en l'occurrence elle a une forme courbée. Le tuyau d'échappement 32 est en position à niveau de l'encoche 30. On peut voir en pointillé l'âme 27 du profilé 14.

La figure 6 est une vue en perspective du dessous d'un plancher 2 conforme à l'invention, le profilé 14 étant selon le deuxième mode de réalisation présenté en relation avec la figure 5. Le profilé droit de renfort 14 est fixé sous la face inférieure 13 de la paroi 6, dans le tunnel 8, et dans l'axe de deux traverses transversales 10 (représentées en pointillé). On peut voir la forme concave orientée vers le bas du tunnel 8 ainsi que le tuyau d'échappement 32 logé dans le tunnel 8 au niveau du profilé droit de renfort 14, plus précisément au niveau de l'encoche 30 de la cloison verticale 26 du profilé 14. Une bride de fixation 54 est montée sur les languettes de fixation 52 des cloisons 26. Elle permet en l'occurrence la fixation d'un équipement relatif à l'installation d'une sonde 56 de contrôle des échappements. De manière à faciliter le logement de la sonde 56 dans le tunnel, l'encoche peut être décalée latéralement par rapport à l'axe longitudinal du véhicule. La largeur 58 du profilé 14, dans la direction longitudinale du véhicule, est comprise entre 60% et 140% de la largeur 60 de la traverse d'assises 10. La largeur 58 du profilé peut aussi être comprise entre 80% et 120% de la largeur 60 de la traverse 10.

En termes de fabrication, la paroi 6 formant le tunnel central 8 est généralement réalisée par l'assemblage de trois emboutis, deux emboutis latéraux étant montés autour d'un embouti central en forme de tunnel. Les emboutis latéraux sont généralement soudés dans le prolongement ou par un léger recouvrement au niveau des faces latérales de l'embouti central.

## Revendications

1. Plancher (2) de véhicule automobile comprenant :
- une paroi (6) formant un tunnel central (8) de concavité vers le bas s'étendant dans la direction longitudinale du véhicule ; et
- une ou plusieurs traverse(s) transversale(s) d'assise (10) fixées sur la face supérieure (11) de la paroi (6) latéralement au tunnel (8); et
- un ou plusieurs renfort(s) (14) fixé(s) sur la face inférieure (13) de la paroi (6) dans le tunnel (8);
au moins un renfort (14) est un profilé (14) essentiellement droit s'étendant dans le tunnel (8) dans la direction transversale du véhicule, ledit profilé (14) étant situé, longitudinalement, au niveau d'une traverse transversale (10), de manière à rigidifier le plancher (2) en cas de choc latéral du véhicule, **caractérisé en ce que** le profilé (14) forme un profil en I en position couché, les ailes du I étant formées par deux cloisons verticales (26).

2. Plancher (2) selon la revendication 1, **caractérisé en ce que** le profilé transversal (14) est fixé au fond (18) du tunnel (8) au moyen de nervures (20), ledit fond (18) et le profilé (14) formant un corps creux (22) le long desdites nervures (20).

3. Plancher (2) selon la revendication 2, **caractérisé en ce que** la hauteur du corps creux est comprise entre 30% et 60% de la hauteur (24) du profilé (14), préférentiellement entre 40% et 50%.

4. Plancher (2) selon l'une des revendications 1 à 3, **caractérisé en ce que** le contour inférieur (28) des cloisons verticales (26) comprend une encoche (30) apte à recevoir par en dessous le passage d'un tuyau d'échappement (32).

5. Plancher (2) selon l'une des revendications 1 à 4, **caractérisé en ce que** la hauteur (29) des cloisons (26) au niveau de l'encoche (30) est de moins de 60%, préférentiellement moins de 40% de la hauteur au niveau de leurs extrémités latérales (36).

6. Plancher (2) selon l'une des revendications 1 à 5, **caractérisé en ce que** le profilé (14) est fixé par ses extrémités latérales (50) au moyen de nervures (42) sur les faces latérales (16) du tunnel (8), lesdites nervures (42) étant préférentiellement formées dans les cloisons verticales (26) dudit profilé (14).

7. Plancher (2) selon l'une des revendications 1 à 6, **caractérisé en ce que** le profilé est réalisé en une pièce, préférentiellement deux (26), encore plus préférentiellement trois (44, 26), lesdites pièces (44, 26) formant ledit profilé (14) étant mises à forme, préférentiellement par emboutissage.

8. Véhicule automobile (1) comprenant :
- deux longerons longitudinaux (4) ;
- un plancher (2) fixé aux deux longerons (4) ;
**caractérisé en ce que** le plancher (2) est selon l'une des revendications 1 à 7.

9. Véhicule automobile (1) selon la revendication 8, **caractérisé en ce que** un profilé (14) est monté dans l'axe d'une traverse arrière (17) d'assise avant (12) de manière à renforcer le plancher, en particulier au niveau de la tête du conducteur ou du passager, en cas de choc latéral sur un poteau.

## Patentansprüche

1. Boden (2) eines Motorfahrzeugs, umfassend:
- eine Wand (6), die einen zentralen Tunnel (8) mit Konkavität nach unten bildet, der sich in die Längsrichtung des Fahrzeugs erstreckt; und
- einen oder mehr transversale(n) Sitzquerträger (10), die auf der oberen Fläche (11) der Wand (6) seitlich zu dem Tunnel (8) befestigt sind; und
- eine oder mehr Verstärkung(en) (14), die auf der unteren Fläche (13) der Wand (6) in dem Tunnel (8) befestigt ist (sind);
wobei mindestens eine Verstärkung (14) ein im Wesentlichen gerades Profil (14) ist, das sich in dem Tunnel (8) in die Querrichtung des Fahrzeugs erstreckt, wobei das Profil (14) longitudinal im Bereich eines transversalen Querträgers (10) derart liegt, dass der Boden (2) im Fall eines Seitenaufpralls des Fahrzeugs versteift wird, **dadurch gekennzeichnet, dass** das Profil (14) ein I-Profil in liegender Position bildet, wobei die Flügel des I von zwei vertikalen Wänden (26) gebildet sind.

2. Boden (2) nach Anspruch 1, **dadurch gekennzeichnet, dass** das Querprofil (14) auf dem Grund (18) des Tunnels (8) mittels Rippen (20) befestigt ist, wobei der Grund (18) und das Profil (14) einen Hohlkörper (22) entlang der Rippen (20) bilden.

3. Boden (2) nach Anspruch 2, **dadurch gekennzeichnet, dass** die Höhe des Hohlkörpers zwischen 30 % und 60 % der Höhe (24) des Profils (14), bevorzugt zwischen 40 % und 50 %, liegt.

4. Boden (2) nach einem der Ansprüche 1 bis 3, **dadurch gekennzeichnet, dass** die untere Kontur (28) der vertikalen Wände (26) eine Kerbe (30) umfasst, die geeignet ist, um von unten her die Passage eines Auspuffrohrs (32) aufzunehmen.

5. Boden (2) nach einem der Ansprüche 1 bis 4, **dadurch gekennzeichnet, dass** die Höhe (29) der Wände (26) im Bereich der Kerbe (30) weniger als 60 %, bevorzugt weniger als 40 % der Höhe im Bereich der seitlichen Enden (36) beträgt.

6. Boden (2) nach einem der Ansprüche 1 bis 5, **dadurch gekennzeichnet, dass** das Profil (14) durch seine seitlichen Enden (50) mittels Rippen (42) auf den seitlichen Flächen (16) des Tunnels (8) befestigt ist, wobei die Rippen (42) bevorzugt in den vertikalen Wänden (26) des Profils (14) ausgebildet sind.

7. Boden (2) nach einem der Ansprüche 1 bis 6, **dadurch gekennzeichnet, dass** das Profil aus einem Stück hergestellt ist, bevorzugt aus zwei (26), noch besser drei (44, 26), wobei die Teile (44, 26), die das Profil (14) bilden, bevorzugt durch Stanzen geformt werden.

8. Motorfahrzeug (1), umfassend:
- zwei longitudinale Längsträger (4);
- einen Boden (2), der an den zwei Längsträgern (4) befestigt ist;
**dadurch gekennzeichnet, dass** der Boden (2) gemäß einem der Ansprüche 1 bis 7 gestaltet ist.

9. Motorfahrzeug (1) nach Anspruch 8, **dadurch gekennzeichnet, dass** ein Profil (14) in der Achse eines hinteren Querträgers (17) eines vorderen Sitzes (12) derart montiert ist, dass es den Boden insbesondere im Bereich des Kopfs des Fahrers oder des Beifahrers bei einem seitlichen Aufprall auf einem Pfosten verstärkt.

## Claims

1. A motor vehicle floor (2) including:
- a wall (6) forming a central tunnel (8) with downward concavity extending in the longitudinal direction of the vehicle; and
- one or more transverse seat cross-members (10) fixed to the upper face (11) of the wall (6) laterally with respect to the tunnel (8); and
- one or more reinforcements (14) fixed to the lower face (13) of the wall (6) in the tunnel (8) ;
at least one reinforcement (14) is an essentially straight profile (14) extending in the tunnel (8) in the transverse direction of the vehicle, said profile (14) being situated, longitudinally, at the level of a transverse cross-member (10), so as to rigidify the floor (2) in the event of a side impact to the vehicle, **characterized in that** the profile (14) forms an I-section profile in lying position, the wings of the I being formed by two vertical partitions (26).

2. The floor (2) according to Claim 1, **characterized in that** the transverse section (14) is fixed to the bottom (18) of the tunnel (8) by means of ribs (20), said bottom (18) and the profile (14) forming a hollow body (22) along said ribs (20).

3. The floor (2) according to Claim 2, **characterized in that** the height of the hollow body is comprised between 30% and 60% of the height (24) of the profile (14), preferably between 40% and 50%.

4. The floor (2) according to one of Claims 1 to 3, **characterized in that** the lower contour (28) of the vertical partitions (26) includes a recess (30) able to receive from below the passage of an exhaust pipe (32).

5. The floor (2) according to one of Claims 1 to 4, **characterized in that** the height (29) of the partitions (26) at the level of the recess (30) is less than 60%, preferably less than 40% of the height at the level of their lateral ends (36).

6. The floor (2) according to one of Claims 1 to 5, **characterized in that** the profile (14) is fixed by its lateral ends (50) by means of ribs (42) on the lateral faces (16) of the tunnel (8), said ribs (42) being preferably formed in the vertical partitions (26) of said profile (14).

7. The floor (2) according to one of Claims 1 to 6, **characterized in that** the profile is realized in one piece, preferably two (26), still more preferably three (44, 26), said pieces (44, 26) forming said profile (14) being shaped, preferably by stamping.

8. A motor vehicle (1) including:
- two longitudinal side members (4);
- a floor (2) fixed to the two side members (4);
**characterized in that** the floor (2) is according to one of Claims 1 to 7.

9. The motor vehicle (1) according to Claim 8, **characterized in that** a profile (14) is mounted in the axis of a rear cross-member (17) of a front seat (12) so as to strengthen the floor, in particular at the level of the head of the driver or passenger, in the event of a side impact on a pillar.
